# EUROPEAN PATENT SPECIFICATION

(11) **EP 2 442 596 B1**
(45) Date of publication and mention of the grant of the patent: **02.04.2014**
(21) Application number: 10306125.5
(22) Date of filing: 15.10.2010
(51) Int. Cl.: H04W 8/02

(54) **Method and apparatus for providing distributed mobility management in a network**
Verfahren und Vorrichtung zur Bereitstellung von verteilter Mobilitätsverwaltung in einem Netzwerk
Procédé et appareil pour fournir la gestion de la mobilité distribuée dans un réseau

(43) Date of publication of application: 18.04.2012
(73) Proprietor: Alcatel Lucent, 75007 Paris (FR)
(72) Inventor: Janssens, Nico, 2580, Putte (BE); Pianese, Fabio, 1000, Brussels (BE); Bosch, Peter, 1432 MN, Aalsmeer (NL); Duminuco, Alessandro, 2000, Antwerpen (BE)
(74) Representative: ALU Antw Patent Attorneys

(56) References cited:
- US-A1- 2006 030 326
- US-A1- 2008 225 780
- US-A1- 2009 285 179
- "LTE; General Packet Radio Service (GPRS) enhancements for Evolved Universal Terrestrial Radio Access Network (E-UTRAN) access (3GPP TS 23.401 version 9.5.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V9.5.0, 1 June 2010 (2010-06-01), pages 1-17, XP002620234,

## Description

### Field of Invention

The present invention relates to the field of communication networks, more particularly the issue of managing mobility in wireless communication networks.

### Background

In modern mobile networks, such as those according to the 3GPP Long Term Evolution (LTE) standard, mobility functions are managed by a Mobility Management Entity (MME). Individual MME instances typically serve a very large geographic area. The MME equipment provides both storage of state information pertaining to the user equipment (UE) in the served area and processing of messages from attached base stations. 3GPP TS 23.401 version 9.5.0 Release 9 discloses the functionality of the MME in a LTE network, wherein the MME is a central control unit for controlling a large set of tracking areas and user equipments.

### Summary

A problem of the existing deployment model is that it provides a very high barrier to entry for operators that want to offer services in a new geographic area, due to the required investments in infrastructure. It is a goal of the present invention to overcome that problem by providing a scalable deployment model for the Mobility Management Entity.

According to an aspect of the present invention, there is provided a method for providing distributed mobility management in a network, the method comprising: receiving at a first mobility management entity from among a plurality of distributed mobility management entities a message from a base station or a service gateway, said message being associated with a user equipment; retrieving state information pertaining to said user equipment from a data storage means; and processing said message on the basis of said state information; wherein said data storage means is common to said plurality of distributed mobility management entities.

It is an advantage of the invention that it provides a distributed Mobility Management Entity model, wherein the processing services of the traditional, centralized Mobility Management Entity are provided by multiple decentralized entities. The invention is based on the insight that by delegating the responsibility for storing the user equipment's state information in a consistent way (e.g., in a centralized storage, or in a distributed storage with consistency safeguards and access locking mechanisms), the actual processing of mobility related messages may be decentralized without the risk of compromising data consistency. Hence, the Mobility Management Entity instances according to the present invention may be substantially stateless.

In an embodiment, the method of the present invention further comprises: updating said state information; committing said updated state information to said data storage means.

In an embodiment of the method of the present invention, said data storage means is a reliable object storage. In a particular embodiment, said reliable object storage determines data location by using a distributed hash table. In a more particular embodiment, said reliable object storage determines a pointer to a data location by using a distributed hash table.

In an embodiment of the method of the present invention, said state information comprises the identification of a second mobility management entity from among said plurality of mobility management entities, and wherein said processing comprises forwarding said message to said second mobility management entity.

In an embodiment of the method of the present invention, said state information comprises an indication whether said user equipment is active or dormant.

It is an advantage of this embodiment that the method can be used to implement state transitions according to mobile standards such as the LTE standard (23.401). The LTE standard labels the active state as "ECM_CONNECTED" and the dormant state as "ECM_IDLE".

In an embodiment of the method of the present invention, said state information comprises an identification of a tracking area.

In an embodiment of the method of the present invention, said state information comprises at least one of authentication credentials, cryptographic material such as encryption keys, timers, and identifications or addresses of other network entities.

According to a further aspect of the invention, there is provided a mobility management entity for use in a distributed architecture including a plurality of distributed mobility management entities, said mobility management entity comprising: interfacing means for interfacing with at least one base station, with at least one service gateway, and with a data storage means, a receiver adapted to identify a user equipment to which a received message pertains; a state retrieval agent for retrieving state information pertaining to said user equipment from said storage means; and a processor for processing said received message on the basis of said state information, wherein said data storage means is common to said plurality of distributed mobility management entities.

In an embodiment, the mobility management entity of the present invention is further adapted to update said state information and to commit said updated state information to said data storage means.

In an embodiment of the mobility management entity of the present invention, said processor is further adapted to extract an identification of a peer from said state information and to forward said message to said peer.

It is an advantage of this embodiment that a mobility management entity that processes state information for a given user equipment instance may learn that another mobility management entity (i.e., a peer) is presently managing the state of that user equipment instance, and that the processing of a pending message may subsequently be handed over to the peer.

In an embodiment of the mobility management entity of the present invention, said processor is further adapted to send instructions to said at least one base station or said service gateway based on said message and said state information.

According to another aspect of the present invention, there is provided a network system comprising a plurality of base stations, a plurality of distributed mobility management entities as defined above according to the preceding aspect, a service gateway, and data storage means, wherein each of said plurality of base stations is operatively connected to at least one of said plurality of mobility management entities to exchange messages therewith, and wherein each of said plurality of mobility management entities is operatively connected to said data storage means to retrieve state information therefrom.

### Brief Description of the Figures

Some embodiments of apparatus and/or methods in accordance with embodiments of the present invention are now described, by way of example only, and with reference to the accompanying drawings, in which:
Figure 1 depicts the various subcomponents of the System Architecture Evolution;
Figure 2a is a message diagram representing a peer-to-peer architecture for reliable object storage, as may be used in embodiments of the invention;
Figure 2b is a simplified scheme for implementing the reliable object storage, as may be used in embodiments of the invention;
Figure 3 schematically depicts an exemplary mobile network for use by mobile user equipment, in which mobility is managed according to an embodiment of the invention;
Figure 4 provides a flow chart of steps to be performed by a distributed Mobility Management Entity in a method according to an embodiment of the invention;
Figure 5 presents a schematic of the abstract components of a Mobility Management Entity according to an embodiment of the invention.

### Description of Embodiments

Telecommunication services are typically implemented as strongly integrated hardware and software solutions. Virtualizing these telecommunication services enables to execute them on commodity hardware, instead of being tightly coupled to dedicated hardware. This virtualization may fundamentally change the telecommunication business. Virtualization enables telecom operators to adopt new business models. A traditional service provider can leverage its network to become a unique Infrastructure-as-a-Service (IaaS) provider, which is able to host mission-critical communication applications. Besides, virtualization permits telecom operators to deploy their virtual services on external infrastructure, hence gaining faster penetration and adoption when exploring new markets. Furthermore, decoupling software from hardware offers telecom operators the competitive advantage to adapt, extend or update their services more easily in response to changing market requirements, as well as to adapt to unanticipated load pattern changes.

Technological innovation is needed to achieve the benefits of telecom operator virtualization without compromising the stringent operational requirements inherent to telecom operator services (including performance, reliability and scalability). The present invention provides technology to meet these extra-functional requirements when virtualizing the Mobility Management Entity (MME) of the 3GPP Long Term Evolution (LTE) standard.

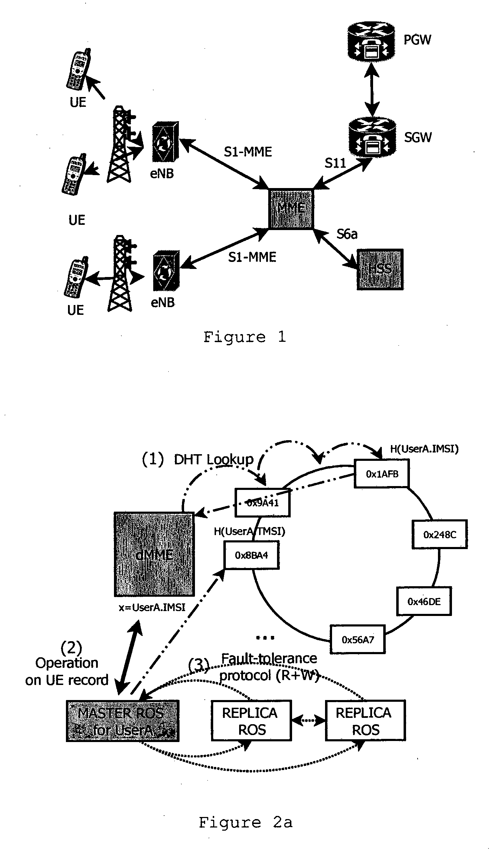

The MME is the key control-component of the System Architecture Evolution (SAE), which is the core network architecture of the LTE standard. Figure 1 depicts the various subcomponents of the SAE. The MME provides the main control functionalities for the LTE access-network, including authentication, paging and mobility management. This functionality is typically deployed in a centralized fashion, where a single MME box manages a large set of tracking areas (TA) and controls a significant number of users.

The present invention is based on the insight that it is advantageous to transform today's centralized, monolithic MMEs into a distributed application connecting multiple dMMEs (distributed MMEs). This is radical departure from the architectural philosophy underlying the present mobile networks, which aims to resolve all availability, reliability and scalability issues centrally. According to the present invention, these issues can be resolved in a distributed way.

The key innovation is in keeping these dMMEs stateless, and dynamically "page in" UE state on message request arrival. To be precise, UE state (including the addresses of the affected TA, eNB and SGW) is not stored by the dMMEs themselves, but instead is made persistent using dedicated storage support (called Reliable Object Storage, which will be discussed below).

Separating the processing of the UE state (handled by the stateless dMMEs) from its storage (handled by dedicated network protocols and backed by physical memory) is an important enabler to meet the MME's stringent reliability requirements.

The distributed MME (dMME) implements the business logic required for (1) loading a UE's state, (2) enacting the MME protocol and parsing/dispatching the appropriate messages, and (3) forwarding requests to another dMME instance. In case of dMME failure, a new dMME instance (or another existing one) can transparently continue operations after retrieving the last consistent UE state from the storage. It has been observed that separating the processing of UE state from its storage enables improving performance by (1) relocating the dMME to run on hardware which is closer to the current location of the UE in the cellular network, (2) handing over UE management to other dMME instances that present lower resource load, and (3) dynamically re-allocating UE management in case of planned downtime of a dMME instance. A reduction of overall control traffic on the backhaul network may be expected as a result of this separation.

Hence, in terms of the LTE standard, dMME instances implement all the methods and data structures required by the MME state machine specification (known in the standard as the Mobility Application Function, MAF).

To preserve the consistency of UE state, we write it to a stable network-based storage support, named Reliable Object Storage (ROS). The ROS can be implemented either in a classic way (e.g., remote file server, memory-based database, etc.) or using a distributed storage system optimized for storing UE state in a fault-tolerant and redundant manner.

The distributed design of the ROS may be based on distributed hash table (DHT) technology for membership management and content lookup. To be more precise, a DHT is used to map a UE's IMSI and TMSI on the coordinates of the ROS server(s) where a UE's state is actually.

In particular, in order to be able to retrieve the appropriate UE state from the ROS, a dMME relies on a lookup function that returns a pointer to the ROS instance on which the UE state is stored (see (1) in Figure 2a). The lookup function therefore plays a similar role to the multiplexing and load-balancing service in the centralized MME specification (the Mobility Interface Function, MIF).

Flexibility and resilience to churn is provided by the use of structured overlays as both inter-entity communication facilities and membership management schemes. Due to its intended deployment scenario as part of a managed system, the use of relatively expensive techniques such as O(1) DHTs is acceptable because of their low maintenance footprint. One-hop DHTs also have the advantage of providing lower lookup latencies than ordinary DHTs with O (log(n)) routing iterations, which is a desirable property as a lookup is required before MME message processing can be initiated at dMME instances with stale local UE context.

A simple protocol is used by dMME instances to access the UE data stored in the ROS. A dMME performs state retrieval upon receipt of a message from a UE or from a network service gateway (SGW). As the dMMEs are stateless, until a local user context is created the messages received from users without a local context result in a lookup query to the ROS. After a successful lookup, a message exchange ensues with the ROS to obtain a copy of the UE state (see (2) in Figure 2a). If the lookup fails, a new user context is created locally, which will subsequently be placed in the ROS by the dMME instance that created it.

Concurrent access to the same user data by different dMMEs is always possible since the triggering messages (network events) are originated by independent entities, such as eNB nodes during handover or service/packet gateways SGW/PGW), and furthermore can be arbitrarily delayed by the network. Leases are used to guarantee mutual exclusion on the dMME's ownership of each UE state record: this is required for a correct execution of the MME protocol, in order to prevent multiple state machines from simultaneously serving a same UE, which would lead to unpredictable results. A lease can either be explicitly terminated by the active dMME, or it can expire due to timeout.

Finally, the ROS implements well-known data replication and consistency techniques to achieve fault-tolerance (see (3) in Figure 2a). A fault-tolerance protocol ensures the consistency between a master copy of the UE state and a number of replicas spread across the system.

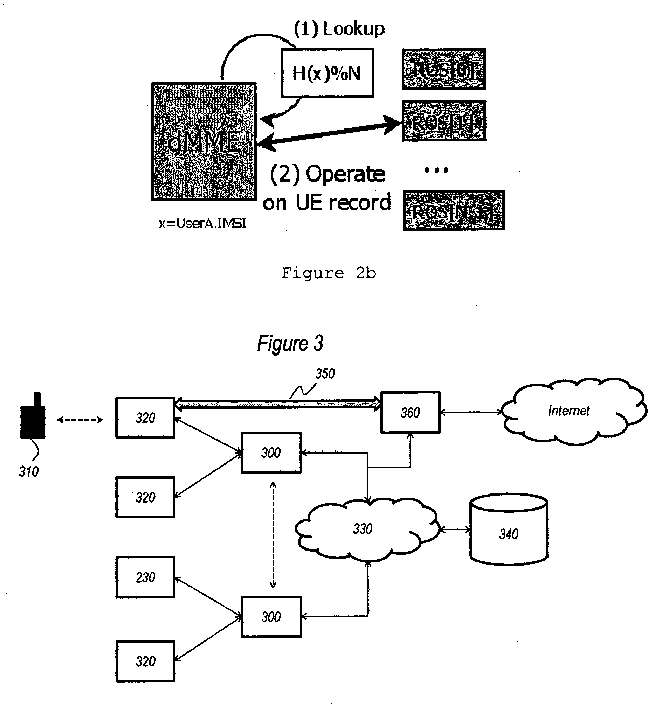

Figure 2b presents a less complex variant to find the ROS that accommodates the affected state information. Instead of using a DHT for indexing, every dMME uses a cryptographic hash function as the lookup mechanism (see (1) and (2) in Figure 2b). The lease mechanism will still be used to avoid inconsistencies caused by concurrent data access.

The skilled person will understand that other configurations than those depicted in Figures 2a and 2b are also possible without departing from the principles of the invention.

The overall scheme we propose for distributed MME deployment is depicted in Figure 3. Figure 3 schematically depicts a mobile network for use by a mobile user equipment instance **310**. Without loss of generality, a network is shown with four base stations **320**. Again without loss of generality, the base stations **320** connect to two distributed mobility management entities **300**, which interface with a common storage infrastructure **340** via a network **330**, the details of which are irrelevant for the present invention, and with one or more service gateways **360**, only one of which is illustrated.

The common storage infrastructure **340** is depicted as a single storage node connected via the network, but it may in fact be implemented by any of the means known to provide reliable object storage in a network. As several dMME instances **300** will be accessing the state information in the storage infrastructure **340**, it is recommended to implement user data consistency safeguards. These safeguards are well known to the person skilled in the art of database implementation, and may include a lease or lock mechanism that prevents granting access to records for which another client has already obtained a "write" lease. The common storage infrastructure **340** may store user equipment state information in one or more (dynamic) hash tables, using an identifier of the user equipment **310** as the lookup key.

In an advantageous embodiment of the invention, the actual storage **340** is distributed over multiple nodes, and an additional layer of indirection is added to restore a degree of locality to the content. In particular, the content of the hash table may be a pointer indicating the physical location of the requested data, wherein the physical location is preferably chosen in a node that is geographically close to the current location, the last known location, or the tracking area of the concerned user equipment **310**. In this way, needless delays in the transmission of the state information may be avoided.

The invention is *inter alia* based on an insight to push more intelligence to the edge of the cellular network, and to run in the "base stations" **320** (either the same hardware where the eNB runs, or a machine very close to it) and in/near the packet/service "gateways" **360**, both the dMMEs **300** and possibly also some ROS **340** nodes. We also suggest leveraging the existing central offices to host a number of dMME and ROS instances among the existing copious amount of dedicated hardware. Finally, internal or external data centers can also be leveraged to augment the safety of the state storage operation and the peak capacity of the whole system, with a large number of ROS instances (likely depending on the size of the UE population).

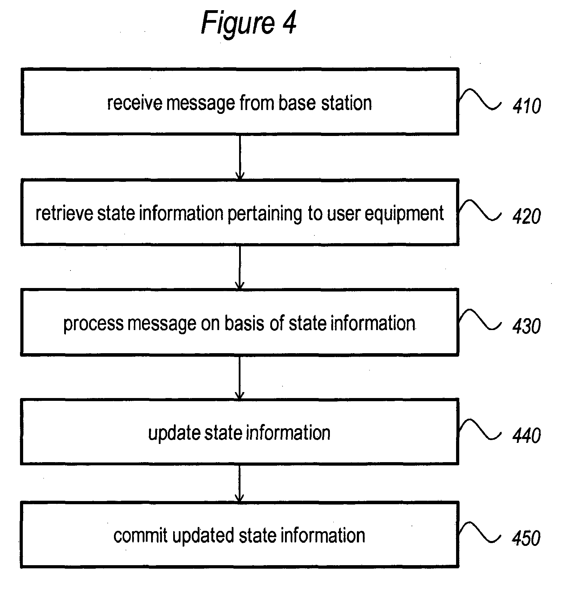

Figure 4 provides a flow chart of steps to be performed by a distributed Mobility Management Entity **300** in a method according to the invention. In a first step **410**, the dMME **300** receives a message from a base station **320**, pertaining to a particular piece of user equipment **310**. The dMME **300** detects the identity of the concerned user equipment **310**, and requests its state information from the common storage infrastructure **340** via the network **330** in a second step **420**. In a third step **430** the dMME **300** processes the message in accordance with the applicable protocols and/or standards, taking into account the user equipment's state information received in the second step **420**. The processing of the message in the third step **430** may lead to a change in the state of the concerned user equipment **310**. In that case, a fourth step **440** may consist of locally updating the state equipment, and a fifth step **450** may consist of committing the updated state information to the common storage infrastructure **340**.

The actual processing **430** may include the registration of a user equipment instance **310** onto the wireless network, the creation of a session or a bearer **350** for the concerned user equipment instance **310** from the base station **320** to a gateway **360**, which is connected to the network of interest (e.g., the Internet, the Public Switched Telephone Network, or the Extended Universal Terrestrial Radio Access Network [EUTRAN] for interoperability with previous 3G cellular networks.). The processing may also include handling a handover, which may comprise tearing down the session or bearer **350** between a first base station **320** and the gateway **360** after setting up a new session or bearer **350** between a second base station **320** and the gateway **360**. The processing may include discovering that a different dMME **330** is registered as the "primary" dMME for the concerned user equipment instance **310**, and relaying the received message to the primary dMME (this dMME-to-dMME interaction is depicted in Figure 3 as a dashed arrow). If the concerned user equipment instance **310** is not active, i.e. dormant, according to the available state information, the registered primary dMME need not be invoked, and the active dMME may take up the role of being primary dMME for this user equipment.

Although the exchange described above starts in the first step **410** with the dMME **300** receiving a message from a base station **320**, the invention also extends to exchanges that are initiated by a message from a service gateway **360** to the dMME **300**. The remaining steps **420-450** of the method will be substantially the same, and need not be repeated in detail.

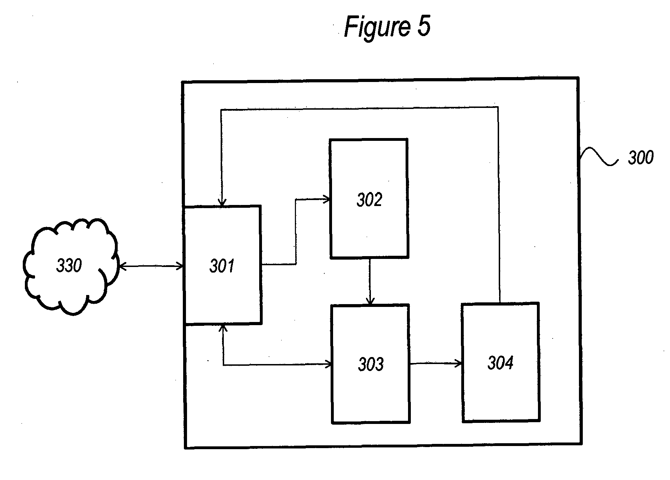

The present invention also pertains to an apparatus for use in the method described above, i.e. a distributed mobility management entity. Figure 5 presents a schematic of the abstract components of a Mobility Management Entity according to the invention, for use in a distributed architecture. It is an insight underlying the invention that the processing of mobility related management can advantageously be distributed across multiple dMME instances **300**, without risking data inconsistency, if the dMME **300** are adapted to interface, via network **330**, with a common storage infrastructure **340** that stores the state information pertaining to the different user equipment instances **310**. To this end, the dMME **300** comprises interfacing means **301**, which may be implemented according to any suitable well-known networking standard, including without limitation the Ethernet standards family (IEEE 802.3) and the WiMAX standards family (IEEE 802.16). A receiver **302** receives messages from a base station **320** or from a service gateway 360 via interfacing means **301**, and identifies the user equipment instance **310** to which the message pertains. This information is provided to a state retrieval agent **303**, which uses the network interface **310** to query the common storage infrastructure **340** for this user equipment's state information. The state information and the received message are passed on to the processor **304**, which performs the actual processing of the message. Where appropriate, the processing may lead to an update of the state information. The updated state information may be committed to the common object storage **340** via the state retrieval agent **303** and the interface **301**.

The Mobility Management Entity **300** according to the invention is preferably adapted to operate according to the various embodiments of the method of the invention, as described above.

The method presented above is a unique enabler to build a virtualized version of the Mobility Management Entity (MME). Virtualizing telecom operator services (such as an MME) enables, among others, faster and cheaper deployment of new services and technologies. Furthermore, the solution we present enables to deploy a reliable and elastic MME infrastructure, which can gracefully withstand and adapt to unanticipated load changes.

Embodiments of the present invention thus provide advantages *inter alia* in the areas of scalability (tuning the system capacity to the size of the user base by transparently adding resources to the system), processing locality (by an opportune local deployment of MME instances processing can be performed closer to the network edge, reducing latency and computing capacity needed from the underlying hardware), and fault tolerance (by reducing the scope impacted by any replica's failure partial faults are better tolerated). The architecture of the present invention can therefore be implemented by means of readily available hardware, which can in turn result in cost savings.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for providing distributed mobility management in a network, the method comprising:
receiving (410) at a first mobility management entity (300) from among a plurality of distributed mobility management entities a message from a base station (320) or a service gateway (360), said message being associated with a user equipment (310);
retrieving (420) state information pertaining to said user equipment (310) from a data storage means (340); and
processing (430) said message on the basis of said state information; wherein
said data storage means (340) is common to said plurality of distributed mobility management entities.

2. The method of claim 1, further comprising:
updating (440) said state information;
committing (450) said updated state information to said data storage means (340).

3. The method of any of the preceding claims, wherein said data storage means (340) is a reliable object storage.

4. The method of claim 3, wherein said reliable object storage determines data location by using a distributed hash table.

5. The method of claim 4, wherein said reliable object storage determines a pointer to a data location by using a distributed hash table.

6. The method of any of the preceding claims, wherein said state information comprises the identification of a second mobility management entity (300) from among said plurality of mobility management entities, and wherein said processing (430) comprises forwarding said message to said second mobility management entity (300).

7. The method of any of the preceding claims, wherein said state information comprises an indication whether said user equipment (310) is active or dormant.

8. The method of any of the preceding claims, wherein said state information comprises an identification of a tracking area.

9. The method of any of the preceding claims, wherein said state information comprises at least one of authentication credentials, cryptographic material such as encryption keys, timers, and identifications or addresses of other network entities.

10. A mobility management entity (300) for use in a distributed architecture including a plurality of distributed mobility management entities, said mobility management entity (300) comprising:
interfacing means (301) for interfacing with at least one base station, with at least one service gateway, and with a data storage means (340),
a receiver (302) adapted to identify a user equipment (310) to which a received message pertains;
a state retrieval agent (303) for retrieving state information pertaining to said user equipment (310) from said storage means (340); and
a processor (304) for processing said received message on the basis of said state information, wherein said data storage means is common to said plurality of distributed mobility management entities.

11. The mobility management entity (300) of claim 10, further adapted to update said state information and to commit said updated state information to said data storage means (340).

12. The mobility management entity (300) of any of claims 10 and 11, wherein said processor (304) is further adapted to extract an identification of a peer from said state information and to forward said message to said peer.

13. The mobility management entity (300) of any of claims 10 to 12, wherein said processor (304) is further adapted to send instructions to said at least one base station (320) or said service gateway (360) based on said message and said state information.

14. A network system comprising a plurality of base stations (320), a plurality of mobility management entities (300) according to any of claims 10 to 13, a service gateway (360), and data storage means (340), wherein each of said plurality of base stations (320) is operatively connected to at least one of said plurality of mobility management entities (300) to exchange messages therewith, and wherein each of said plurality of mobility management entities (300) is operatively connected to said data storage means (340) to retrieve state information therefrom.

## Patentansprüche

1. Verfahren zur Bereitstellung von verteilter Mobilitätsverwaltung in einem Netzwerk, wobei das Verfahren umfasst:
Empfangen (410), an einer ersten Mobilitätsverwaltungsentität (300) unter einer Vielzahl von verteilten Mobilitätsverwaltungsentitäten, einer Nachricht von einer Basisstation (320) oder einem Dienst-Gateway (360), wobei die besagte Nachricht mit einem Benutzerendgerät (310) assoziiert ist;
Abrufen (420) von Zustandsinformationen in Bezug auf das besagte Benutzerendgerät (310) aus einem Datenspeichermittel (340); und
Verarbeiten (430) der besagten Nachricht auf der Basis der besagten Zustandsinformationen;
wobei das besagte Datenspeichermittel (340) der besagten Vielzahl von verteilten Mobilitätsverwaltungsentitäten gemeinsam ist.

2. Verfahren nach Anspruch 1, weiterhin umfassend:
Aktualisieren (440) der besagten Zustandsinformationen;
Sichern (450) der besagten aktualisierten Zustandsinformationen in dem besagten Datenspeichermittel (340).

3. Verfahren nach einem beliebigen der vorstehenden Ansprüche, wobei das besagte Datenspeichermittel (340) ein betriebssicherer Objektspeicher ist.

4. Verfahren nach Anspruch 3, wobei der besagte betriebssichere Objektspeicher den Speicherort der Daten unter Verwendung einer verteilten Hash-Tabelle bestimmt.

5. Verfahren nach Anspruch 4, wobei der besagte betriebssichere Objektspeicher einen Zeiger auf einen Speicherort der Daten unter Verwendung einer verteilten Hash-Tabelle bestimmt.

6. Verfahren nach einem beliebigen der vorstehenden Ansprüche, wobei die besagten Zustandsinformationen die Kennung einer zweiten Mobilitätsverwaltungsentität (300) unter der besagten Vielzahl von Mobilitätsverwaltungsentitäten umfassen, und wobei die besagte Verarbeitung das Weiterleiten der besagten Nachricht an die besagte zweite Mobilitätsverwaltungsentität (300) umfasst.

7. Verfahren nach einem beliebigen der vorstehenden Ansprüche, wobei die besagten Zustandsinformationen eine Angabe darüber, ob sich das besagte Benutzerendgerät (310) im aktiven oder im schlafenden Zustand befindet, umfassen.

8. Verfahren nach einem beliebigen der vorstehenden Ansprüche, wobei die besagten Zustandsinformationen eine Kennzeichnung eines Nachverfolgungsbereichs umfassen.

9. Verfahren nach einem beliebigen der vorstehenden Ansprüche, wobei die besagten Zustandsinformationen mindestens entweder Authentifizierungsnachweise, kryptographisches Material wie beispielsweise Chiffrierschlüssel, Timer, Kennungen oder Adressen anderer Netzwerkentitäten umfassen.

10. Mobilitätsverwaltungsentität (300) zur Verwendung in einer verteilten Architektur, welche eine Vielzahl von verteilten Mobilitätsverwaltungsentitäten einschließt, wobei die besagte Mobilitätsverwaltungsentität (300) umfasst:
Schnittstellenmittel (301) zur Anbindung an mindestens eine Basisstation, mindestens ein Dienst-Gateway und ein Datenspeichermittel (340),
einen Empfänger (302), welcher dazu ausgelegt ist, ein Benutzerendgerät (310), auf welches sich die empfangene Nachricht bezieht, zu identifizieren;
einen Zustandsabfrageagenten (303) zum Abrufen von Zustandsinformationen, welche das besagte Benutzerendgerät (310) betreffen, aus dem entsprechenden Speichermittel (340); und
einen Prozessor (304) zum Verarbeiten der besagten Nachricht auf der Basis der besagten Zustandsinformationen, wobei das besagte Datenspeichermittel der besagten Vielzahl von verteilten Mobilitätsverwaltungsentitäten gemeinsam ist.

11. Mobilitätsverwaltungsentität (300) nach Anspruch 10, weiterhin ausgelegt für die Aktualisierung der besagten Zustandsinformationen und die Sicherung der besagten aktualisierten Zustandsinformationen in dem besagten Datenspeichermittel (340).

12. Mobilitätsverwaltungsentität (300) nach einem beliebigen der Ansprüche 10 und 11, wobei der besagte Prozessor (304) weiterhin dazu ausgelegt ist, eine Kennung eines Peers aus den besagten Zustandsinformationen zu extrahieren und die besagte Nachricht an den besagten Peer weiterzuleiten.

13. Mobilitätsverwaltungsentität (300) nach einem beliebigen der Ansprüche 10 bis 12, wobei der besagte Prozessor (304) weiterhin dazu ausgelegt ist, auf der Basis der besagten Nachricht und der besagten Zustandsinformationen Anweisungen an die besagte mindestens eine Basisstation (320) oder an das besagte Dienst-Gateway (360) zu senden.

14. Netzwerksystem, umfassend eine Vielzahl von Basisstationen (320), eine Vielzahl von Mobilitätsverwaltungsentitäten (300) gemäß einem beliebigen der Ansprüche 10 bis 13, ein Dienst-Gateway (360) und ein Datenspeichermittel (340), wobei eine jede der besagten Vielzahl von Basisstation (320) betriebsbereit mit mindestens einer der besagten Vielzahl von Mobilitätsverwaltungsentitäten (300) verbunden ist, um Nachrichten damit auszutauschen, und wobei eine jede der besagten Vielzahl von Mobilitätsverwaltungsentitäten (300) betriebsbereit mit dem besagten Datenspeichermittel (340) verbunden ist, um Zustandsinformationen daraus abzurufen.

## Revendications

1. Procédé pour fournir une gestion de mobilité distribuée dans un réseau, le procédé comprenant les étapes suivantes :
recevoir (410) au niveau d'une première entité de gestion de mobilité (300) parmi une pluralité d'entités de gestion de mobilité distribuée un message provenant d'une station de base (320) ou d'une passerelle de service (360), ledit message étant associé à un équipement utilisateur (310) ;
récupérer (420) des informations d'état appartenant audit équipement utilisateur (310) à partir d'un moyen de stockage de données (340) ; et
traiter (430) ledit message sur la base desdites informations d'état ; dans lequel ledit moyen de stockage de données (340) est commun à ladite pluralité d'entités de gestion de mobilité distribuée.

2. Procédé selon la revendication 1, comprenant en outre les étapes suivantes :
mettre à jour (440) lesdites informations d'état ;
engager (450) lesdites informations d'état mises à jour vis-à-vis dudit moyen de stockage de données (340).

3. Procédé selon l'une quelconque des revendications précédentes, dans lequel ledit moyen de stockage de données (340) est un dispositif de stockage d'objets fiable.

4. Procédé selon la revendication 3, dans lequel ledit dispositif de stockage d'objets fiable détermine la localisation de données en utilisant une table de hachage distribuée.

5. Procédé selon la revendication 4, dans lequel ledit dispositif de stockage d'objets fiable détermine un pointeur vers une localisation de données en utilisant une table de hachage distribuée.

6. Procédé selon l'une quelconque des revendications précédentes, dans lequel lesdites informations d'état comprennent l'identification d'une deuxième entité de gestion de mobilité (300) parmi ladite pluralité d'entités de gestion de mobilité, et dans lequel ledit traitement (430) comprend le transfert dudit message vers ladite deuxième entité de gestion de mobilité (300).

7. Procédé selon l'une quelconque des revendications précédentes, dans lequel lesdites informations d'état comprennent une indication selon laquelle ledit équipement utilisateur (310) est actif ou dormant.

8. Procédé selon l'une quelconque des revendications précédentes, dans lequel lesdites informations d'état comprennent une identification d'une zone de suivi.

9. Procédé selon l'une quelconque des revendications précédentes, dans lequel lesdites informations d'état comprennent au moins un élément parmi des certificats d'authentification, un matériel cryptographique comme des clés de chiffrement, des temporisateurs et des identifications ou des adresses d'autres entités de réseau.

10. Entité de gestion de mobilité (300) à utiliser dans une architecture distribuée comprenant une pluralité d'entités de gestion de mobilité distribuée, ladite entité de gestion de mobilité (300) comprenant :
un moyen d'interfaçage (301) pour servir d'interface avec au moins une station de base, avec au moins une passerelle de service et avec un moyen de stockage de données (340),
un récepteur (302) adapté pour identifier un équipement utilisateur (310) auquel un message reçu appartient ;
un agent de récupération d'état (303) pour récupérer des informations d'état appartenant audit équipement utilisateur (310) à partir dudit moyen de stockage (340) ; et
un processeur (304) pour traiter ledit message reçu sur la base desdites informations d'état, dans laquelle ledit moyen de stockage de données est commun à ladite pluralité d'entités de gestion de mobilité distribuée.

11. Entité de gestion de mobilité (300) selon la revendication 10, adaptée en outre pour mettre à jour lesdites informations d'état et pour engager lesdites informations d'état mises à jour vis-à-vis dudit moyen de stockage de données (340).

12. Entité de gestion de mobilité (300) selon l'une quelconque des revendications 10 et 11, dans laquelle ledit processeur (304) est en outre adapté pour extraire une identification d'un poste à partir desdites informations d'état et pour transférer ledit message vers ledit poste.

13. Entité de gestion de mobilité (300) selon l'une quelconque des revendications 10 à 12, dans laquelle ledit processeur (304) est en outre adapté pour envoyer des instructions à ladite au moins une station de base (320) ou à ladite passerelle de service (360) sur la base dudit message et desdites informations d'état.

14. Système de réseau comprenant une pluralité de stations de base (320), une pluralité d'entités de gestion de mobilité (300) selon l'une quelconque des revendications 10 à 13, une passerelle de service (360), et un moyen de stockage de données (340), dans lequel chacune parmi ladite pluralité de stations de base (320) est connectée de manière opérationnelle à au moins une parmi ladite pluralité d'entités de gestion de mobilité (300) pour échanger des messages avec celles-ci, et dans lequel chacune parmi ladite pluralité d'entités de gestion de mobilité (300) est connectée de manière opérationnelle audit moyen de stockage de données (340) pour récupérer des informations d'état à partir de celui-ci.
